# FASCICULE DE BREVET EUROPEEN

(11) **EP 0 637 177 B1**
(45) Date de publication et mention de la délivrance du brevet: **22.09.1999**
(21) Numéro de dépôt: 94401700.3
(22) Date de dépôt: 25.07.1994
(51) Int. Cl.: H04Q 1/14

(54) **Colonne de répartiteur téléphonique**
Fernsprechverteilerleiste
Telephone distributing frame column

(30) Priorité: 27.07.1993 FR 9309227
(43) Date de publication de la demande: 01.02.1995
(73) Titulaire: ALCATEL, 75008 Paris (FR)
(72) Inventeur: Maurice, Denis, F-08150 Rimogne (FR)
(74) Mandataire: Buffière, Michelle

(56) Documents cités:
- EP-A- 0 491 252
- DE-U- 8 816 595

## Description

La présente invention concerne les répartiteurs téléphoniques. Elle porte plus particulièrement sur une colonne de répartiteur, équipée pour la réalisation des différentes fonctions à assurer à son niveau, dans le répartiteur.

De manière connue, les répartiteurs comprennent des profilés porteurs sur lesquels sont montés des équipements de raccordement et des équipements accessoires, en définissant une organisation du répartiteur en colonnes. Ces profilés ou les colonnes résultantes sont en général verticaux, mais peuvent tout aussi bien être horizontaux.

Les équipements de raccordement sont des blocs de raccordement, tels que des têtes de câbles ou des réglettes de raccordement. Ils sont reliés pour les uns aux différentes lignes d'un ou de plusieurs câbles d'entrée et pour les autres aux différentes lignes d'un ou de plusieurs câbles de sortie. Ils reçoivent des jarretières assurant le raccordement des lignes des câbles d'entrée et de sortie et le brassage de ces raccordements.

Les équipements accessoires sont notamment des anneaux de guidage vertical des jarretières et en général également des anneaux de guidage horizontal des jarretières, ces derniers anneaux étant le plus souvent situés au bas des profilés. Ce sont aussi des éléments de guidage et/ou de maintien des câbles d'entrée et de sortie ou de leurs lignes desservant une colonne. Ce sont encore des éléments de fixation des profilés à une structure fixe, par exemple au sol et/ou au plafond, ou à un mur ou à une paroi d'armoire du répartiteur. Ce sont en outre des supports d'étiquettes d'identification des colonnes et des lignes desservant la colonne. Ces équipements accessoires sont montés sur les profilés à l'aide d'éléments individuels de fixation, pour définir des colonnes autonomes rendues prêtes pour le montage final des blocs de raccordement et pour le raccordement des câbles d'entrée et de sortie par les jarretières.

Le document EP-A-0074898 décrit un répartiteur ainsi réalisé en colonnes autonomes. Chaque colonne est définie sur un profilé particulier. Chaque profilé présente deux joues latérales reliées par deux premières traverses dites internes et par deux deuxièmes traverses dites externes. Ces traverses sont toutes saillantes sur les joues latérales et y définissent une série d'ailes latérales. Les joues latérales définissent entre elles, sur les faces avant et arrière du profilé, une cavité avant et une cavité arrière fendue en long. Les ailes latérales délimitent deux à deux entre elles, sur chaque face latérale, deux gorges de vissage et une cavité centrale analogue à celles avant et arrière. Les ailes, les gorges de vissage et les cavités avant, arrière et latérales permettent divers modes de fixation de supports spécifiques de fixation prévus pour chacun des différents types d'équipements à monter sur le profilé. Ces supports de fixation, en général métalliques, sont des plats, en forme de U, qui sont rapportés sur la face avant ou arrière du profilé et dont les branches sont fixées par vis dans les gorges latérales de vissage ou sont clipsés contre les ailes latérales, ou sont des platines de différentes longueurs, en forme d'équerre, dont l'un des jambages est bloqué dans l'une des cavités ou contre la face extérieure de l'une des cavités.

La constitution d'une colonne de répartiteur, selon ce document, nécessite un nombre important de différents supports de fixation, qui se fixent différemment les uns des autres sur les profilés. Les opérations de montage des équipements sur leur support de fixation et des supports de fixation sur les profilés restent relativement longues.

La présente invention a pour but de simplifier la constitution des colonnes de répartiteurs, en utilisant des profilés porteurs de type standard dits profilés linéaires sur lesquels sont montés des pièces modulaires définissant à souhait les fonctions de différents équipements accessoires traditionnels connus et rendant les opérations de montage rapides et aisées.

Elle a pour objet une colonne de répartiteur téléphonique, dite colonne simple de répartiteur monoface, comportant un profilé porteur, dit vertical, constitué par un rail linéaire ayant des gorges longitudinales sur deux faces opposées dites avant et arrière et deux branches latérales opposées et parallèles auxdites faces avant et arrière, sur lequel sont montés des blocs de raccordement retenus sur la face avant du profilé, reliés à des lignes téléphoniques et recevant des jarretières, et des équipements accessoires dits de guidage vertical des jarretières pour des premiers d'entre eux, de guidage horizontal des jarretières pour au moins un deuxième d'entre eux et de fixation du profilé à une structure fixe pour des troisièmes d'entre eux, caractérisée en ce que lesdits premiers, ledit deuxième et lesdits troisième équipements accessoires sont constitués par des anneaux identiques, fixés à souhait horizontalement le long de la face arrière du profilé et verticalement à au moins l'une des parties terminales de la face avant du profilé, assurant le guidage vertical arrière et le guidage horizontal avant des jarretières et assurant simultanément la fixation du profilé à la structure fixe, et en ce que chaque anneau comporte une paroi dite externe présentant une première partie plane, opposée à une entrée/sortie des jarretièrers sur cet anneau et affectée à fixation de l'anneau verticalement sur le profilé à l'aide d'au moins une première vis de serrage dans un écrou terminal rhomboïdal associé logé dans l'une des gorges de la face du profilé, et une première portion latérale plane, transversale à ladite première partie et affectée sélectivement d'une part à la fixation de l'anneau horizontalement sur le profilé, par au moins une deuxième vis de serrage dans un autre écrou terminal rhomboïdal associé logé dans l'une des gorges de la face arrière du profilé et d'autre part à la fixation du profilé à la structure fixe, alors horizontale, par une troisième vis d'ancrage traversant ladite première portion latérale de l'anneau fixé verticalement au profilé.

Cette colonne de répartiteur présente de préférence en outre au moins l'une des caractéristiques additionnelles suivantes:
- la première partie de la paroi externe présente un doigt de guidage, saillant extérieurement et se logeant dans une autre gorge de la face avant du profilé,
- la première portion latérale présente une patte de guidage saillante extérieurement et se logeant dans l'une des gorges de la face arrière du profilé,
- cette première portion est directement reliée à ladite première partie sensiblement à une première extrémité de cette première partie, ladite première extrémité formant une dent terminale saillante sur la face extérieure de ladite première portion latérale, de guidage et d'accrochage dans une autre des gorges de la face arrière du profilé,
- la paroi externe présente une deuxième portion latérale plane parallèle et opposée à la première portion latérale, affectée à la fixation du profilé à la structure fixe, alors verticale, par l'anneau fixé horizontalement au profilé et au moins une vis d'ancrage traversant ladite deuxième portion latérale,
- l'anneau présente une rainure longitudinale, sur sa paroi externe affectée au maintien d'une étiquette d'identification de la colonne et des lignes la desservant,
- les anneaux fixés horizontalement assurent le guidage et le maintien des lignes contre la première partie de leur paroi externe ou la fixation d'une goulotte de guidage des lignes contre ladite première partie de leur paroi externe,
- la colonne est rendue double pour un répartiteur double face par montage symétrique de deux colonnes simples, en regard l'une de l'autre, assemblées l'une à l'autre par leurs anneaux fixés horizontalement, les anneaux horizontaux de même niveau étant accolés l'un à l'autre et assemblés l'un à l'autre par des vis et un écrou associé à chacune de ces vis.

Les caractéristiques et avantages de la présente invention ressortiront de la description d'un exemple préféré de réalisation illustré dans les dessins ci-annexés. Dans ces dessins:
- la figure 1 est une vue partielle en perspective d'une colonne de répartiteur selon l'invention,
- la figure 2 est une vue en élévation de l'un des anneaux de la colonne de la figure 1,
- la figure 3 est une vue en coupe de l'anneau selon la ligne III-III de la figure 2,
- la figure 4 est une vue de côté de l'anneau de la figure 2,
- la figure 5 est une vue en coupe selon la ligne V-V de la figure 2,
- la figure 6 est une vue de dessus de la colonne de la figure 1, pour un répartiteur monoface,
- la figure 7 est une vue de dessus d'une colonne dite double d'un répartiteur double face.

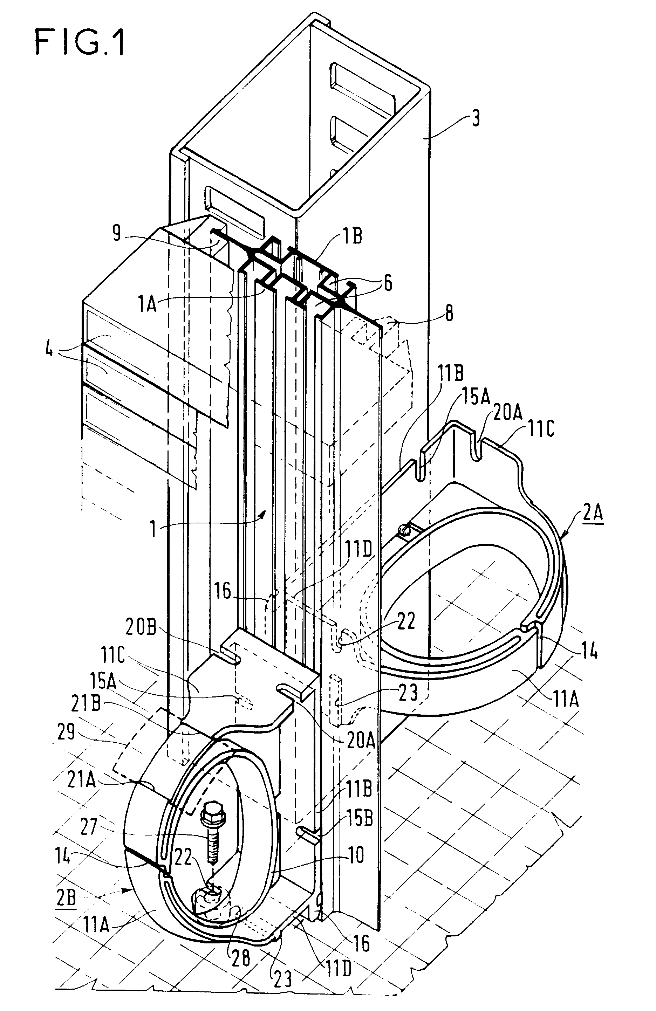

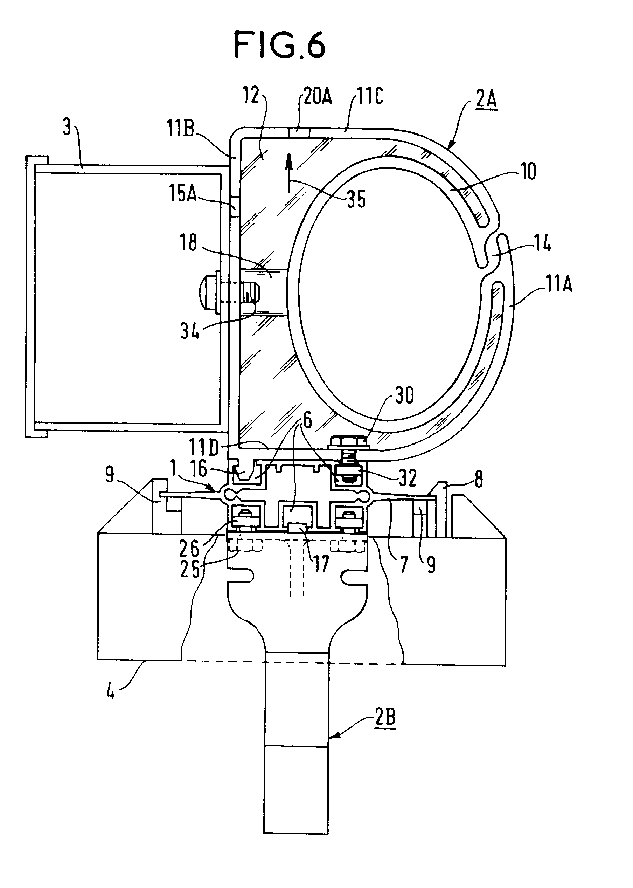

Les figures 1 et 6 montrent la constitution d'une colonne de répartiteur monoface, selon l'invention. La colonne est définie sur un profilé porteur 1, de type standard déjà utilisé dans les répartiteurs.

Ce profilé porte des anneaux, qui sont identiques les uns aux autres mais remplissent des fonctions différentes, tels que le seul anneau horizontal 2A et le seul anneau vertical 2B illustrés. L'ensemble des anneaux sur le profilé constitue la majorité des équipements accessoires sur le profilé 1, pour définir une colonne partiellement équipée, alors rendue prête pour le raccordement des lignes des câbles d'entrée et de sortie.

Cette colonne partiellement équipée comporte en outre, dans cette réalisation, une goulotte 3 fixée aux anneaux horizontaux tels que l'anneau 2A. Cette goulotte s'étend sur au moins une partie de la longueur du profilé. Elle est de section en U et est fermée par un couvercle clipsé sur l'ouverture du U. Ses deux parois de part et d'autre de la base du U sont ajourées. Cette goulotte est de préférence en plastique ou peut être métallique.

Le profilé reçoit sur l'une de ses faces, dite face avant, des blocs de raccordement auxquels sont reliées des lignes d'entrée ou de sortie. Ces mêmes blocs de raccordement reçoivent en face avant des jarretières qui assurent le raccordement des lignes d'entrée reliées à l'un des blocs à celles de sortie reliées à un autre bloc de raccordement en général d'une autre colonne et permettent le brassage des raccordements.

Ces lignes ou les câbles d'entrée et de sortie et ces jarretières ne sont pas illustrées, leur mode de raccordement étant en tant que tel bien connu et en dehors du cadre de l'invention.

Le profilé 1 est métallique et constitué par un rail creux de type linéaire. Il présente en face avant 1A et en face arrière 1B des gorges longitudinales 6, de section en U, dont les extrémités des branches forment une paire d'ailettes limitant l'ouverture du U. Ces gorges sont au nombre de trois en face avant et de deux en face arrière, les gorges arrière étant en regard des deux gorges avant les plus extérieures. Ce profilé présente en outre deux branches 7 s'étendant axialement d'un côté et de l'autre du profilé, sur lesquelles se fixent les blocs de raccordement 4, montés en face avant. Les blocs de raccordement comportent chacun pour cette fixation une paire de pattes élastiques 8 d'encliquetage sur le bout des deux branches latérales 7 et une paire de pattes rigides 9 de butée contre ces mêmes branches.

Les anneaux 2A montés horizontalement sur le profilé 1 sont fixés sur sa face arrière. Les anneaux 2B montés verticalement sont fixés sur au moins l'une des parties terminales de la face avant du profilé.

Les anneaux horizontaux tels que l'anneau 2A assurent le guidage vertical des jarretières le long du profilé. Ils assurent aussi la fixation de la goulotte 3 relativement au profilé et une possible fixation du profilé à un mur ou à la paroi arrière d'une armoire de répartiteur.

Les anneaux verticaux tels que l'anneau 2B assurent le guidage horizontal des jarretières au bas et/ou en haut de la série de profilés du répartiteur, la fixation possible au sol et/ou au plafond ou à la paroi inférieure et/ou supérieure de l'armoire de répartiteur.

La goulotte 3 fixée aux anneaux horizontaux permet un guidage vertical des lignes desservant les blocs de raccordement montés en face avant de chaque profilé. Ces anneaux horizontaux peuvent permettre directement le guidage et le maintien contre eux des lignes desservant les blocs de raccordement montés sur les profilés, ceci en l'absence de goulotte sur la longueur totale ou partielle de chaque profilé.

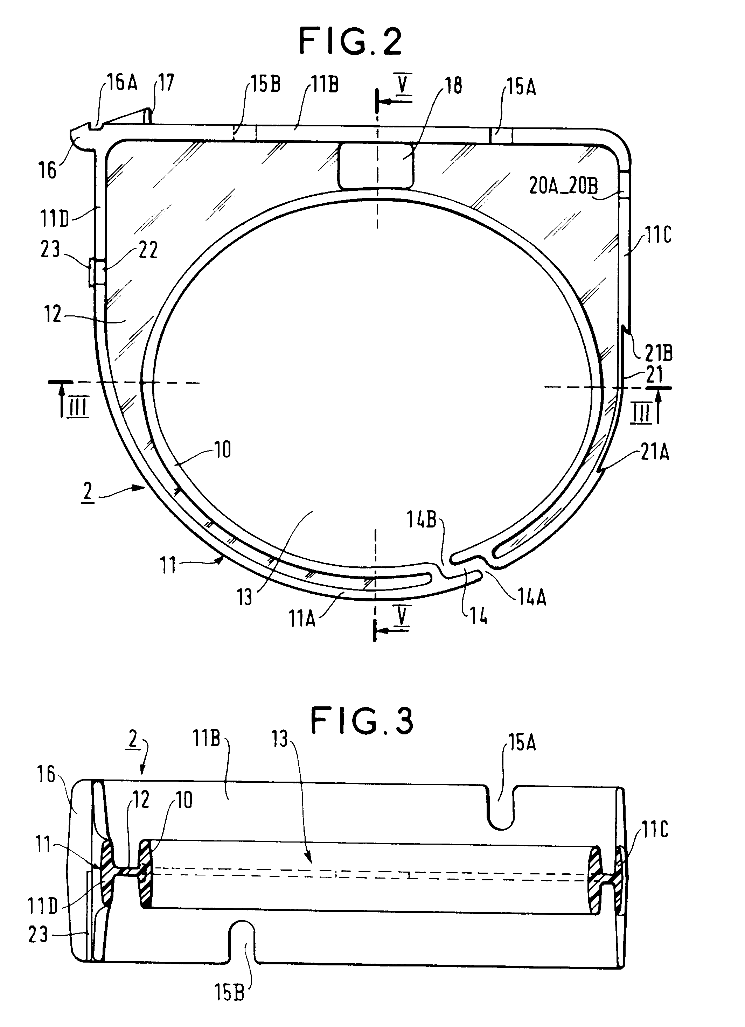

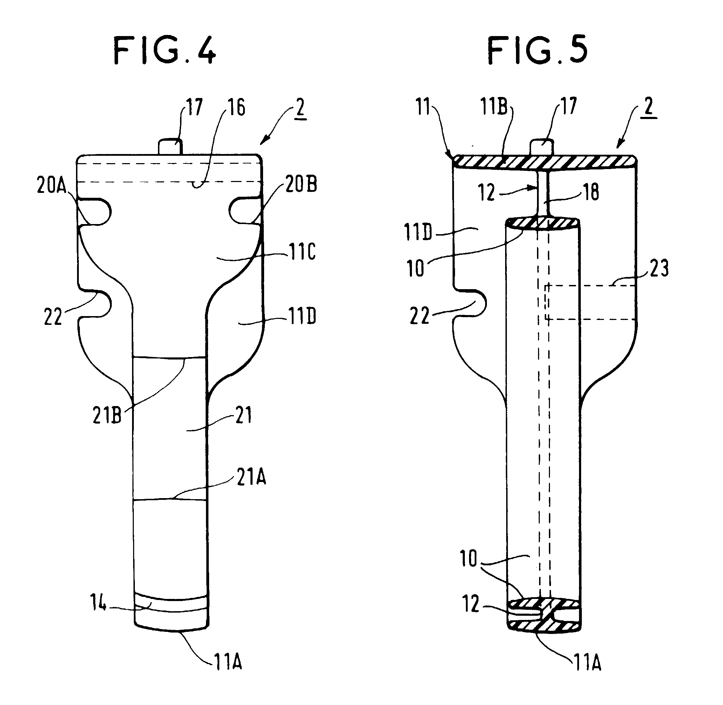

Les anneaux verticaux et horizontaux, identiques les uns aux autres, sont décrits en se référant aux figures 2 à 5. L'anneau illustré dans ces figures, qui est monté à souhait verticalement ou horizontalement sur l'un des profilés du répartiteur, est désigné sous la référence 2. Il est en plastique et est réalisé de préférence par moulage ou peut être usiné.

Cet anneau 2 est à paroi double, de section en I. Cette paroi double définit une paroi interne 10 et une paroi externe 11, qui sont reliées l'une à l'autre par une toile médiane ou entretoise 12, perpendiculaire aux parois 10 et 11. L'anneau 2 est décrit en le considérant horizontal.

La paroi interne 10 est cylindrique, ayant dans cet exemple une section elliptique, de grand axe et de petit axe sans une très grande différence entre eux, mais pouvant tout aussi bien être de section circulaire ou autre, avec de préférence une partie arquée. Elle délimite l'espace annulaire 13 affecté au maintien des jarretières. Sa hauteur est constante sur toute sa longueur.

La paroi externe 11 présente une première partie arquée 11A, de même hauteur que la paroi interne et relativement faiblement espacée de cette paroi interne, entourant sensiblement une première moitié de la paroi interne ou sur la partie arquée de celle-ci. Elle présente une partie plane 11B, à l'opposé de cette partie arquée 11A, et deux portions latérales planes 11C et 11D entre la partie arquée 11A et la partie plane 11B. Cette partie plane et les deux portions latérales sont de hauteur supérieure à celle de la paroi interne et sont saillantes d'un côté et de l'autre de celle-ci. Les portions latérales 11C et 11D sont perpendiculaires à la partie plane 11B. L'entretoise médiane 12 est de largeur variable.

Les bords périphériques de la paroi interne et de la paroi externe sont arrondis. La partie plane 11B est en outre d'épaisseur légèrement supérieure à celle des portions latérales 11C et 11D et de la partie arquée 11A.

Cet anneau 2 présente une entrée/sortie 14 des jarretières, à travers la partie arquée 11A de la paroi externe et à travers la paroi interne. Cette entrée/sortie 14 constitue un passage en forme de chicane définie par un léger décalage entre l'ouverture 14A de la paroi externe et celle 14B de la paroi interne. Elle est en outre légèrement décentrée sur la première moitié de la paroi interne et sur la partie arquée de la paroi externe, avec l'ouverture 14A légèrement plus décentrée que l'ouverture 14B, pour s'opposer à une sortie naturelle des jarretières de l'espace intérieur 13 de l'anneau monté verticalement ou horizontalement.

L'anneau 2 présente deux échancrures 15A et 15B, respectivement sur les deux bords longitudinaux de la partie 11B, ces échancrures étant de part et d'autre du plan transversal médian de cette partie 11B. Il comporte une dent 16, qui est définie par l'un des deux bords latéraux de cette partie plane 11B et est délimitée par une rainure 16A, cette rainure s'étendant sur la hauteur de la face externe de cette partie 11B. Il comporte en outre sur cette même partie plane 11B un doigt de guidage 17, saillant sur sa face extérieure et proche de la rainure. Ce doigt est centré en regard de la rainure.

L'entretoise 12, présente une ouverture 18, de forme rectangulaire, dans sa partie centrale de largeur moindre située entre la partie plane 11B de la paroi externe 11 et la paroi interne 10.

Cet anneau présente en outre, sur sa portion latérale plane 11C située à l'opposé de la dent 16, deux échancrures 20A et 20B qui sont opposées l'une à l'autre et réalisées sur ses deux bords, respectivement. Ces deux échancrures 20A et 20B sont proches de la jonction de la portion 11C avec la partie plane 11B, cette jonction étant arrondie. Au delà de ces échancrures 20A et 2B, les bords de la portion 11C sont partiellement tronqués sur sa partie terminale ainsi rendue de même hauteur que celle de la partie arquée 11A. Une rainure longitudinale 21 est prévue sur la face extérieure des portions terminales de cette portion 11C et de la partie arquée 11A, sur toute leur hauteur, en réduisant leur épaisseur. Cette rainure est limitée de part et d'autre par deux lèvres terminales de retenue 21A, 21B, qui sont légèrement saillantes sur la rainure à ses deux bouts.

L'autre portion latérale plane 11D présente une seule échancrure 22 sur l'un de ses bords longitudinaux. Cette échancrure est relativement éloignée de la jonction de cette portion 11D à la partie plane 11B. Cette portion 11D présente aussi une patte de guidage 23 légèrement saillante sur sa face extérieure et s'étendant selon l'axe de l'échancrure 22, depuis l'autre bord de la portion 11D jusqu'à sa partie médiane correspondant au niveau de l'entretoise. Au delà de cette échancrure 22 et de cette patte 23, les bords de la portion 11D sont tronqués et ramenés chacun au même niveau que celui du bord correspondant de la partie arquée 11A. On précise en outre que la distance entre l'échancrure 22 et la dent 16 correspond à celle entre les deux gorges arrière des profilés et que cette dent 16 est saillante sur la portion latérale 11D.

Les rôles des diverses dispositions, prévues sur l'anneau 2 et décrites ci-avant ou précisées davantage ci-après, et les fonctions résultantes de l'anneau sont indiqués en regard également de la figure 1 et/ou de la figure 6, en considérant l'anneau monté verticalement sur le profilé 1 et alors désigné par la référence 2B et en le considérant monté horizontalement sur le profilé 1 et alors désigné par la référence 2A.

L'anneau vertical 2B est fixé en face avant 1A et au bas du profilé 1 vertical par sa partie plane 11B appliquée contre la face avant 1A. Cette partie plane 11B est de largeur sensiblement égale à celle de la face avant 1A. Elle recouvre la partie terminale inférieure de cette face 1A. Ses deux échancrures 15A et 15B ont chacune leur fond en regard de chacune des deux gorges avant 6 les plus extérieures. Le doigt de guidage 17 correspond quant à lui à la gorge centrale avant 6 et s'y loge pour le centrage de l'anneau vertical 2B contre la face avant 1A. La fixation de cet anneau 2B est assurée par des vis 25, chacune insérée depuis la face interne de la partie 11B dans l'une des échancrures 15A et 15B et vissée dans un écrou terminal rhomboïdal associé 26, qui est quant à lui logé dans l'une des gorges avant extérieures de la face avant 1A. La vis 25 vissée dans son écrou 26 bloque cet écrou dans la gorge avant 6 par une rotation d'un quart de tour de l'écrou. Par la mise en butée de sa tête contre la face interne de la partie 11B et de l'écrou associé contre les bords internes de l'ouverture de la gorge 6, elle bloque l'anneau 2B contre le profilé 1.

Ce même anneau vertical inférieur 2B, permet la fixation du profilé 1 au sol, ou sur le fond d'une armoire de répartiteur. Cette fixation est assurée par une autre vis 27 (figure 1), qui est reçue dans l'échancrure 22 de la portion 11D, traverse un plot de calage 28 et est ancrée dans le sol ou le fond de l'armoire.

Par l'utilisation de cette portion 11D pour la fixation du profilé, l'anneau vertical permet l'identification de la colonne de répartiteur, réalisée à l'aide d'une étiquette 29 coincée dans la rainure 21 sous ses deux languettes terminales. Cet anneau vertical inférieur 2B sur ce profilé et les mêmes anneaux sur les autres profilés du répartiteur définissent un chemin horizontal de guidage des jarretières au bas du répartiteur. L'entrée/sortie 14 des jarretières sur chaque anneau est à l'avant du répartiteur.

De manière analogue, un anneau vertical peut être fixé en face avant sur la partie terminale supérieure de chaque profilé 1, pour assurer des fonctions analogues à l'anneau vertical inférieur.

D'une manière générale, les profilés 1 ne portent qu'un seul anneau vertical inférieur ou supérieur. Pour un répartiteur de grande capacité, chaque profilé supporte deux ou plusieurs anneaux verticaux jointifs les uns aux autres, qui sont montés en face avant et au bas et/ou en haut des profilés. Ces profilés ne portent en général aucun anneau vertical intermédiaire, sauf si les colonnes sont volontairement divisées sur la hauteur du répartiteur ainsi lui-même divisé.

Chaque profilé 1 porte une série d'anneaux horizontaux 2B répartis sur sa hauteur et maintenus plaqués contre sa face arrière, par la portion latérale 11D en appui contre cette face arrière.

Cette fixation de chaque anneau horizontal est montrée dans la figure 6. Elle se fait en engageant la dent 16 de l'anneau dans l'une des gorges arrière 6 et la patte 23 dans l'autre gorge arrière, pour l'application de l'anneau contre la face arrière du profilé. La rainure 16A reçoit le bord extérieur d'ouverture de la gorge contenant la dent 16. Le maintien de cet anneau horizontal est assuré par une vis 30 engagée dans l'échancrure 22 et à laquelle est associée un écrou rhomboïdal terminal 32, qui est lui-même engagé dans la même gorge arrière que la patte 23. Cette vis 30 et son écrou terminal associé 32 sont identiques à la vis 25 et l'écrou associé 26, pour assurer de la manière le blocage de l'anneau horizontal contre le profilé, en face arrière.

Dans ces conditions de fixation, l'anneau horizontal 2A est saillant à l'arrière et sur l'extrémité de la branche 7 sur le côté de droite du profilé 1, tandis que sa partie plane 11B prolonge vers l'arrière le bord latéral de gauche de la face arrière du profilé.

La série d'anneaux horizontaux sur l'arrière du profilé définit le chemin vertical des jarretières le long de ce profilé 1. Les jarretières sont reçues dans le chemin et sont accessibles de ce chemin vertical par le côté de droite du chemin vertical, à travers l'accès d'entrée/sortie 14 de chaque anneau 2A, ces accès d'entrée/sortie étant par ailleurs à l'arrière et en regard de l'intervalle entre la rangée de blocs de raccordement montés à l'avant sur le même profilé 1 et celle analogue portée par le profilé adjacent.

La série d'anneaux horizontaux fixés sur le profilé 1 peut permettre directement le maintien des lignes desservant la rangée de blocs de raccordement montés sur ce profilé. Ce maintien est assuré contre la face externe de la partie plane 11B des anneaux, à l'aide des colliers non représentés, chacun enfilé dans l'ouverture 18 de chaque anneau 2A et retenu dans les deux échancrures 15A et 15B de la partie plane 11B de cet anneau.

La série d'anneaux horizontaux 2A sur le profilé assure dans cette réalisation la fixation de la goulotte 3 relativement au profilé, pour le guidage des lignes desservant les blocs de raccordement. Cette fixation est assurée à l'aide de vis 34, de préférence autotaraudeuses traversant la base du U de la goulotte et reçues dans la partie plane 11B des anneaux, avant la fermeture de la goulotte par le couvercle opposé à sa base et clipsé sur les parties terminales des parois latérales du U. Ces vis sont de préférence montées le long de l'axe longitudinal de la base de la goulotte et débouchent à travers la paroi 11B des anneaux dans l'ouverture 18 de l'entretoise. Elles peuvent en variante être d'un autre type et engagées à travers les échancrures 15A et 15B de la paroi 11B et à travers la base de la goulotte et bloquées par un écrou.

L'autre portion latérale 11C de chaque anneau horizontal est ou peut être utilisé pour la fixation du profilé 1 à un mur ou à une paroi arrière d'armoire de répartiteur. Une telle fixation est assurée à l'aide de vis non représentées, qui sont engagées depuis la face intérieure de la portion 11C dans ses échancrures 20A et 20B et sont ancrées dans le mur ou la paroi arrière d'armoire du répartiteur, ainsi que schématisé par la flèche 35. Dans ces conditions la fixation de la colonne au sol ou le fond d'armoire du répartiteur, assurée par l'anneau vertical inférieur, n'est pas impérative, elle reste cependant préférable.

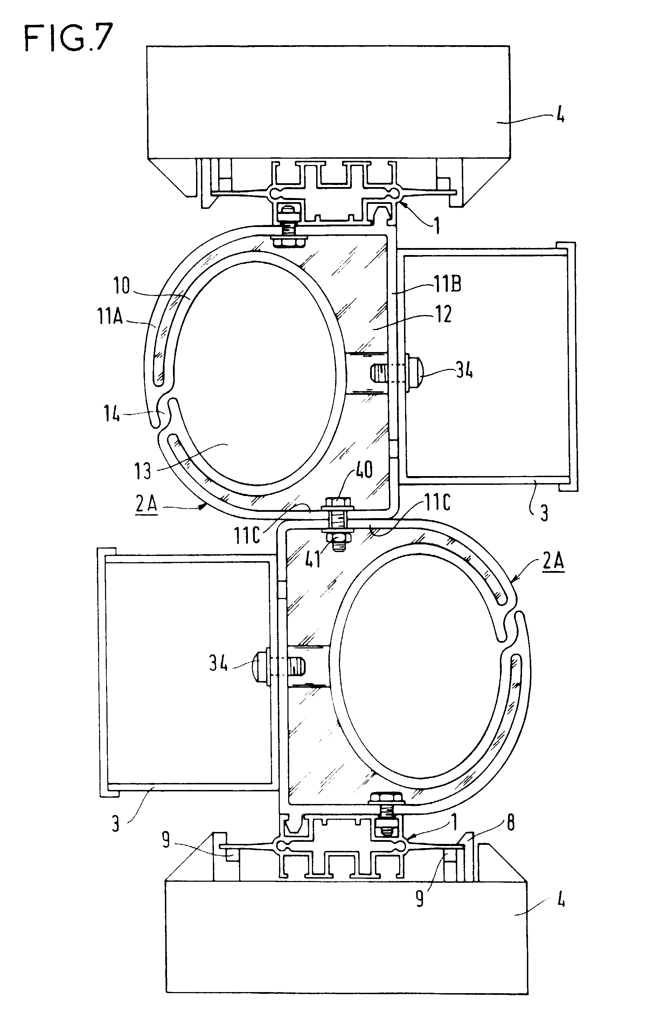

La figure 7 montre la constitution d'une colonne double d'un répartiteur double face. Cette colonne double est obtenue sur deux profilés 1 assemblés l'un à l'autre par la série d'anneaux horizontaux 2A montés sur chacun d'eux.

Ces profilés et ces anneaux sont identiques au profilé et aux anneaux de la colonne simple du répartiteur monoface des figures 1 et 6. On précise simplement que les deux profilés de la colonne double sont disposés de façon symétrique l'un en regard de l'autre, avec leurs anneaux horizontaux s'étendant à des mêmes niveaux et avec une orientation inversée les uns par rapport aux autres, entre les profilés, et étant accolés les uns contre les autres par leurs portions dites latérales 11C et fixés par ces portions accolées.

Cette fixation des deux profilés 1 est assurée à l'aide de vis 40, qui sont engagées dans les deux échancrures 20A et 20B des portions 11C accolées de deux anneaux horizontaux 2A de même niveau, et par un écrou ordinaire 41 associé à chaque vis pour son blocage.

Les fonctions assurées par la série d'anneaux horizontaux 2A sur chacun des deux profilés sont identiques à celles obtenues par les anneaux horizontaux de la colonne simple des figures 1 et 6. Ce sont le guidage vertical des jarretières le long de chaque profilé de la colonne double, le guidage et le maintien des lignes contre la paroi plane 11B des anneaux, par des colliers ou dans la goulotte 3 fixée contre cette même paroi 11B de chaque série d'anneaux 2A. La fonction d'assemblage des deux profilés remplace dans ce cas la fonction possible de fixation de la colonne au mur ou à la paroi arrière d'armoire de répartiteur.

Cette colonne double comporte comme dans les figures 1 et 6 des anneaux verticaux, non représentés, de fixation de la colonne double au sol et/ou au plafond ou aux parois correspondantes d'armoire du répartiteur, qui sont terminaux sur la rangée avant et la rangée arrière de blocs de raccordement 4 montés sur les deux profilés 1 du répartiteur double face. Ces anneaux définissent aussi un chemin de guidage horizontal de jarretières en face avant et en face arrière du répartiteur et permettent une identification de chaque colonne double et deleurs lignes.

## Revendications

1. Colonne de répartiteur téléphonique, dite colonne simple de répartiteur monoface, comportant un profilé porteur, dit vertical, constitué par un rail linéaire ayant des gorges longitudinales sur deux faces opposées dites avant et arrière et deux branches latérales opposées et parallèles (8, 9) auxdites faces avant et arrière, sur lequel sont montés des blocs de raccordement (4) retenus sur la face avant du profilé, reliés à des lignes téléphoniques et recevant des jarretières, et des équipements accessoires dits de guidage vertical des jarretières pour des premiers d'entre eux, de guidage horizontal des jarretières pour au moins un deuxième d'entre eux et de fixation du profilé à une structure fixe pour des troisièmes d'entre eux, caractérisée en ce que lesdits premiers, ledit deuxième et lesdits troisième équipements accessoires sont constitués par des anneaux identiques (2), fixés à souhait horizontalement le long de la face arrière (1B) du profilé et verticalement à au moins l'une des parties terminales de la face avant (1A) du profilé (1), assurant le guidage vertical arrière et le guidage horizontal avant des jarretières et assurant simultanément la fixation du profilé à la structure fixe, et en ce que chaque anneau (2) comporte une paroi dite externe (11) présentant une première partie plane (11B), opposée à une entrée/sortie (14) des jarretièrers sur cet anneau et affectée à la fixation de l'anneau verticalement sur le profilé à l'aide d'au moins une première vis (25) de serrage dans un écrou terminal rhomboïdal associé (26) logé dans l'une des gorges (6) de la face du profilé, et une première portion latérale plane (11D), transversale à ladite première partie (11B) et affectée sélectivement d'une part à la fixation de l'anneau horizontalement sur le profilé, par au moins une deuxième vis de serrage (30) dans un autre écrou terminal rhomboïdal associé (32) logé dans l'une des gorges de la face arrière du profilé et d'autre part à la fixation du profilé à la structure fixe, alors horizontale, par une troisième vis d'ancrage (27) traversant ladite première portion latérale de l'anneau fixé verticalement au profilé.

2. Colonne selon la revendication 1, caractérisée en ce que ladite première partie (11B) de la paroi externe (11) présente un doigt de guidage (17), saillant extérieurement et se logeant dans une autre gorge de la face avant (1A) du profilé.

3. Colonne selon la revendication 2, caractérisée en ce que ladite première partie (11B) de ladite paroi externe présente deux trous (15A, 15B) de passage de deux premières vis (25) de serrage dans leurs écrous associés (26) respectivement logés dans deux des gorges (6) de la face avant du profilé.

4. Colonne selon l'une des revendications 1 à 3, caractérisée en ce que ladite première portion latérale (11D) présente une patte de guidage (23) saillante extérieurement et se logeant dans l'une des gorges (6) de la face arrière du profilé.

5. Colonne selon l'une des revendications 1 à 4, caractérisée en ce que ladite première portion latérale (11D) est directement reliée à ladite première partie (11A) sensiblement à une première extrémité de cette première partie, ladite première extrémité formant une dent terminale (16) saillante sur la face extérieure de ladite première portion latérale, de guidage et d'accrochage dans une autre des gorges (6) de la face arrière du profilé.

6. Colonne selon l'une des revendications 1 à 5, caractérisée en ce que ladite paroi externe présente une deuxième portion latérale plane (11C) parallèle et opposée à la première portion latérale, affectée à la fixation du profilé (1) à la structure fixe, alors verticale, par l'anneau fixé horizontalement au profilé et au moins une vis d'ancrage (35) traversant ladite deuxième portion latérale (11C).

7. Colonne selon l'une des revendications 1 à 6, caractérisée en ce qu'elle présente une rainure longitudinale (21) formée sensiblement depuis l'un des côtés de ladite entrée/sortie (14) vers ladite première partie, sur la face extérieure de ladite paroi externe, affectée au maintien d'une étiquette d'identification (29) de la colonne et des lignes la desservant.

8. Colonne selon l'une des revendications 1 à 7 et comportant des quatrièmes équipements accessoires de maintien des lignes le long du profilé, caractérisée en ce que lesdits quatrièmes équipements accessoires sont constitués par ladite première partie (11B) de la paroi externe des anneaux fixés horizontalement, contre laquelle lesdites lignes sont retenues par un collier de maintien.

9. Colonne selon l'une des revendications 1 à 7, comportant en outre un cinquième équipement accessoire, dite goulotte, de guidage des lignes téléphoniques le long dudit profilé, caractérisée en ce que ladite goulotte est fixée, par vis (34), contre ladite première partie (11B) de la paroi externe (11) des anneaux (2A) fixés horizontalement sur le profilé (1).

10. Colonne selon l'une des revendications 1 à 9, caractérisée en ce que chaque anneau (2) comporte une paroi interne (10) reliée à ladite paroi externe (11) par une toile entretoise médiane (12) et délimitant un espace intérieur (13) de réception des jarretières.

11. Colonne selon la revendication 10, caractérisée en ce que ladite paroi interne (10) est arquée sur sa périphérie et ladite paroi externe (11) présente une deuxième partie (11A) de forme arquée, entourant sensiblement une première moitié de ladite paroi interne (10), ladite entrée/sortie (14) des jarretières étant située sur ladite première moitié de ladite paroi interne et ladite deuxième partie (11A) de la paroi externe.

12. Colonne selon la revendication 11, caractérisée en ce que ladite entrée/sortie (14) est définie par une première ouverture (14B) sensiblement décentrée sur ladite première moitié de ladite paroi interne (10) et par une deuxième ouverture (14A) prévue sur la paroi externe (11) et légèrement décalée relativement à la première ouverture.

13. Colonne selon l'une des revendications 1 à 11 et rendue double pour un répartiteur double face, caractérisée en ce qu'elle comporte deux colonnes simples, montées symétriquement l'une en regard de l'autre et assemblées l'une à l'autre par leurs anneaux (2A) fixés horizontalement, les anneaux horizontaux de même niveau étant accolés l'un à l'autre et assemblés l'un à l'autre par des vis (40) et un écrou (41) associé à chacune de ces vis (40).

14. Colonne selon l'une des revendications 1 à 13, caractérisée en ce que lesdits anneaux (2A) sont en plastique.

## Patentansprüche

1. Fernsprechverteilerleiste, wobei diese einfache einseitige Verteilerleiste, die ein Trägerprofil umfaßt, welches vertikal ist, durch eine lineare Schiene gebildet wird, die auf zwei gegenüberliegenden vorderen und hinteren Flächen Längshohlkehlen aufweist sowie zwei gegenüberliegende, seitliche und zu den Vorder- und Hinterflächen parallele Äste (8, 9), an denen Schaltungsblöcke (4) befestigt sind, die auf der vorderen Fläche des Profils gehalten werden, die mit den Telefonleitungen verbunden sind und Schaltadern aufnehmen, und Zusatzeinrichtungen zur vertikalen Führung der Schaltadern durch die ersten derselben, zur horizontalen Führung der Schaltadern durch zumindest eine zweite derselben und zur Fixierung des Profils an einer festen Struktur durch dritte derselben, dadurch gekennzeichnet, daß diese ersten, zweiten und dritten Zusatzeinrichtungen aus identischen Ringen (2) gebildet sind, die je nach Wunsch horizontal entlang der hinteren Fläche (1B) des Profils und vertikal an einem der Endbereiche der vorderen Fläche (1A) des Profils (1) befestigt sind, wodurch die hintere vertikale Führung und die vordere horizontale Führung der Schaltadern sichergestellt wird und gleichzeitig die Fixierung des Profils an der festen Struktur sichergestellt wird, und dadurch, daß jeder Ring (2) eine äußere Wandung (11) hat, die einen ersten ebenen Bereich (11B) aufweist, welcher einem Eingang/Ausgang (14) für die Schaltadern in den Ring gegenüberliegt und der zur vertikalen Fixierung des Ringes an dem Profil mit Hilfe von zumindest einer ersten Verriegelungsschraube (25) in einer damit verbundenen rhombischen Endmutter (26) dient, die in einer der Hohlkehlen (6) der Fläche des Profils angeordnet ist, und einen ersten ebenen seitlichen Bereich (11D), transversal zu dem ersten Bereich (11B), der selektiv einerseits zur horizontalen Fixierung des Ringes an dem Profil dient, durch zumindest eine zweite Verriegelungsschraube (30) in einer anderen damit verbundenen rhombischen Endmutter (32), die in einer der Hohlkehlen der hinteren Fläche des Profils angeordnet ist, und andererseits zur Fixierung des Profils an der festen Struktur, in der Horizontalen, durch eine dritte Verriegelungsschraube (27), die den ersten seitlichen Bereich des vertikal an dem Profil fixierten Ringes durchdringt.

2. Leiste nach Anspruch 1, dadurch gekennzeichnet, daß der erste Bereich (11B) der äußeren Wandung (11) einen Führungszapfen (17) aufweist, der nach außen vorsteht und in einer anderen Hohlkehle der vorderen Fläche (1A) des Profils zur Anordnung kommt.

3. Leiste nach Anspruch 2, dadurch gekennzeichnet, daß der erste Bereich (11B) der äußeren Wandung zwei Durchgangsbohrungen (15A, 15B) für die zwei ersten Verriegelungsschrauben (25) in ihre verbundenen Muttern (26) aufweist, die jeweils in zwei Hohlkehlen (6) der vorderen Fläche des Profils angeordnet sind.

4. Leiste nach einem der Ansprüche 1 bis 3, dadurch gekennzeichnet, daß der erste seitliche Bereich (llD) einen Führungsvorsprung (23) aufweist, der nach außen vorsteht und in einer der Hohlkehlen (6) der hinteren Fläche des Profils zur Anordnung kommt.

5. Leiste nach einem der Ansprüche 1 bis 4, dadurch gekennzeichnet, daß der erste seitliche Bereich (11D) direkt mit dem ersten Bereich (11A) verbunden ist, im wesentlichen an einem ersten Ende des ersten Bereiches, wobei das erste Ende einen Endvorsprung (16) bildet, der über die äußere Fläche des ersten seitlichen Bereiches vorsteht, zur Führung und zur Verriegelung in einer anderen der Hohlkehlen (6) der hinteren Fläche des Profiles.

6. Leiste nach einem der Ansprüche 1 bis 5, dadurch gekennzeichnet, daß die äußere Wandung einen zweiten ebenen seitlichen Bereich (11C) aufweist, parallel und gegenüber zu dem ersten seitlichen Bereich, der zur Fixierung des Profils (1) an der festen Struktur dient, in der Vertikalen, durch den horizontal an dem Profil fixierten Ring sowie zumindest eine Verankerungsschraube (35), die den zweiten ebenen seitlichen Bereich (11C) durchdringt.

7. Leiste nach einem der Ansprüche 1 bis 6, dadurch gekennzeichnet, daß diese eine Längsnut (21) aufweist, die im wesentlichen ausgehend von einer der Seiten des Eingangs/Ausgangs (14) zu dem ersten Bereich auf der äußeren Fläche der äußeren Wandung ausgebildet ist und zur Aufnahme eines Identifikationsetiketts (29) der Leiste und der Leitungen dient, welche sie bedient.

8. Leiste nach einem der Ansprüche 1 bis 7, welche vierte Zusatzeinrichtungen zur Halterung der Leitungen entlang des Profils umfaßt, dadurch gekennzeichnet, daß die vierten Zusatzeinrichtungen aus dem ersten Bereich (11B) der Wandung der horizontal fixierten Ringe besteht, an dem die Leitungen durch eine Haltemanschette gehalten sind.

9. Leiste nach einem der Ansprüche 1 bis 7, welche darüber hinaus fünfte Zusatzeinrichtungen, im spezielleren Rinnen, umfaßt, zur Führung der Telefonleitungen entlang des Profils, dadurch gekennzeichnet, daß die Rinne durch eine Schraube (34) an dem ersten Bereich (11B) der äußeren Wandung (11) des Ringes (2A) befestigt ist, der horizontal an dem Profil (1) fixiert ist.

10. Leiste nach einem der Ansprüche 1 bis 9, dadurch gekennzeichnet, daß jeder Ring (2) eine innere Wandung (10) umfaßt, die über eine mittlere Stegfläche (12) mit der äußeren Wandung verbunden ist und einen inneren Raum (13) zur Aufnahme der Schaltadern bildet.

11. Leiste nach Anspruch 10, dadurch gekennzeichnet, daß die innere Wandung (10) an Ihrer Peripherie gekrümmt ist und die äußeren Wandung (11) einen zweiten Bereich (11A) gekrümmter Form aufweist, der im wesentlichen eine erste Hälfte der inneren Wand (10) umgibt, wobei der Eingang/Ausgang (14) der Schaltadern in der ersten Hälfte der inneren Wandung angeordnet ist sowie dem zweiten Bereich (11A) der äußeren Wandung.

12. Leiste nach Anspruch 11, dadurch gekennzeichnet, daß der Eingang/Ausgang (14) durch eine leicht exzentrische erste Öffnung (14B) in der ersten Hälfte der inneren Wandung (10) definiert ist, und durch eine zweite Öffnung (14A), die in der äußeren Wandung (11) vorgesehen ist und leicht zur ersten Öffnung versetzt ist.

13. Leiste nach einem der Ansprüche 1 bis 11, welche doppelt für einen Verteiler mit zwei Seiten vorgesehen ist,
dadurch gekennzeichnet, daß sie zwei einfache Leisten umfaßt, die symmetrisch einander gegenüber angeordnet sind und aneinander durch ihre horizontal fixierten Ringe (2A) befestigt sind, wobei die horizontalen Ringe auf derselben Höhe aneinander anliegen und miteinander durch Schrauben (40) und eine Mutter (41) montiert sind, die mit einer jeden der Schrauben (40) verbunden ist.

14. Leiste nach einem der Ansprüche 1 bis 13, dadurch gekennzeichnet, daß die Ringe (2A) aus Kunststoff sind.

## Claims

1. A column for a telephone distribution frame, said column being referred to as a "single column of a single-face distribution frame", and including a "vertical" load-bearing section member constituted by a linear rail having longitudinal channels in two opposite faces referred to as the "front" face and the "rear" face, and two opposite side fins (8, 9) parallel to said front and rear faces, on which section member terminal blocks (4) are mounted that are retained on the front face of the section member, that are connected to telephone lines, and that receive jumpers, and on which section member items of accessory equipment are mounted comprising first items of accessory equipment for "vertically" guiding the jumpers, at least one second item of accessory equipment for "horizontally" guiding the jumpers, and third items of accessory equipment for fixing the section member to a fixed structure, said column being characterized in that said first, second, and third items of accessory equipment are constituted by identical rings (2) fixed at will horizontally along the rear face (1B) of the section member and vertically to at least one of the end portions of the front face (1A) of the section member (1), for providing rear vertical jumper-guiding and front horizontal jumper-guiding, and simultaneously enabling the section member to be fixed to the fixed structure, and in that each ring (2) includes an "outer" wall (11) having a plane first portion (11B) opposite a jumper inlet/outlet (14) in the ring and assigned to fixing the ring vertically to the section member by means of at least one clamping first screw (25) which engages an associated rhombus-shaped end nut (26) received in one of the channels (6) in the face of the section member, and a first plane side segment (11D) transverse to said first portion (11B) and assigned selectively firstly to fixing the ring horizontally to the section member by means of at least one clamping second screw (30) that engages another associated rhombus-shaped end nut (32) received in one of the channels in the rear face of the section member, and secondly to fixing the section member to the fixed structure, which is then horizontal, by means of an anchoring third screw (27) passing through said first side segment of the ring fixed vertically to the section member.

2. A column according to claim 1, characterized in that said first portion (11B) of the outer wall (11) is provided with a guide finger (17) projecting outwardly and being received in another channel in the front face (1A) of the section member.

3. A column according to claim 2, characterized in that said first portion (11B) of said outer wall is provided with two holes (15A, 15B) through which two clamping first screws (25) pass into their associated nuts (26) received in respective ones of two of the channels (6) in the front face of the section member.

4. A column according to any one of claims 1 to 3, characterized in that said first side segment (11D) is provided with an outwardly-projecting guide tab (23) received in one of the channels (6) in the rear face of the section member.

5. A column according to any one of claims 1 to 4, characterized in that said first side segment (11D) is connected directly to said first portion (11A) substantially at a first end of said first portion, said first end forming an end tooth (16) projecting from the rear face of said first side segment, for guiding and fastening in another of the channels (6) in the rear face of the section member.

6. A column according to any one of claims 1 to 5, characterized in that said outer wall is provided with a second plane side segment (11C) parallel to and opposite from the first side segment, and assigned to fixing the section member (1) to the fixed structure, which is then vertical, by means of the ring fixed horizontally to the section member and of at least one anchoring screw (35) passing through said second side segment (11C).

7. A column according to any one of claims 1 to 6, characterized in that it is provided with a longitudinal recess (21) extending substantially from one of the sides of said inlet/outlet (14) to said first portion on the outside face of said outer wall, which recess serves to hold a label (29) for identifying the column and the lines serving said column.

8. A column according to any one of claims 1 to 7 and including fourth items of accessory equipment for holding the lines along the section member, said column being characterized in that said fourth items of accessory equipment are constituted by said first portions (11B) of the outer walls of the horizontally-fixed rings, against which portions said lines are retained by means of holding collars.

9. A column according to any one of claims 1 to 7, further including a fifth item of accessory equipment referred to as a "duct", for guiding the telephone lines along said section member, said column being characterized in that said duct is fixed by means of screws (34) against said first portions (11B) of the outer walls (11) of the rings (2A) fixed horizontally to the section member (1).

10. A column according to any one of claims 1 to 9, characterized in that each ring (2) is provided with an inner wall (10) connected to said outer wall (11) via a middle spacer web (12), and delimiting an inside space (13) for receiving the jumpers.

11. A column according to claim 10, characterized in that said inner wall (10) is arcuate over its periphery, and said outer wall (11) is provided with a second portion (11A) of arcuate shape, surrounding substantially a first half of said inner wall (10), said inlet/outlet of said inner wall and said second portion (11A) of the outer wall.

12. A column according to claim 11, characterized in that said inlet/outlet (14) is defined by a first opening (14B) that is substantially off-center on said first half of said inner wall (10) and by a second opening (14A) provided in the outer wall (11) and slightly offset relative to the first opening.

13. A column according to any one of claims 1 to 11 and made double for a two-face distribution frame, said column being characterized in that it includes two single columns, mounted symmetrically facing each other and assembled together via their rings (2A) fixed horizontally, the pairs of same-level horizontal rings touching each other and being assembled together by screws (40) and nuts (41) associated with respective ones of the screws (40).

14. A column according to any one of claims 1 to 13, characterized in that said rings (2A) are made of plastic.
